# EUROPÄISCHE PATENTSCHRIFT

(11) **EP 0 869 034 B1**
(45) Veröffentlichungstag und Bekanntmachung des Hinweises auf die Patenterteilung: **16.05.2001**
(21) Anmeldenummer: 97121126.3
(22) Anmeldetag: 02.12.1997
(51) Int. Cl.: B60R 9/04

(54) **Dachreling für Fahrzeuge**
Roofrails for vehicles
Rails de toit pour véhicules

(30) Priorität: 03.04.1997 DE 19713772
(43) Veröffentlichungstag der Anmeldung: 07.10.1998
(73) Patentinhaber: JAC Products Deutschland GmbH, 42285 Wuppertal (DE)
(72) Erfinder: Evels, Brigitte, 42119 Wuppertal (DE)

(56) Entgegenhaltungen:
- DE-A- 4 004 829
- DE-A- 4 321 537
- FR-A- 2 694 219
- US-A- 3 707 303
- US-A- 4 645 372

## Beschreibung

Die Erfindung bezieht sich auf eine Dachreling für Fahrzeuge mit einem von Stützfüßen getragenen Holm und mit einer jedem Stützfuß zugeordneten Befestigungseinrichtung zur Befestigungsanordnung an einem sich unter der Dachhaut des Fahrzeugs erstreckenden Spriegel oder einer sonstigen Tragestruktur.

Bekannte Befestigungseinrichtungen für Dachrelings bestehen (vgl. z. B. DE-A-40 04 829 oder DE-A-43 21 537) üblicherweise aus Schraubverbindungen mit an den Stützfüßen angeordneten Gewindebolzen und darauf unter Verspannung am Spriegel aufschraubbare Gewindemuttern. Diese Befestigungsart wird von der Abnehmerschaft von Dachrelings als arbeitsintensiv und umständlich empfunden.

Aufgabe der vorliegenden Erfindung ist es daher, eine Dachreling der eingangs genannten Art zur Verfügung zu stellen, die sich mit wesentlich wenigerem Arbeits- und Zeitaufwand montieren läßt.

Zur Lösung dieser Aufgabe ist erfindungsgemäß vorgesehen, daß die Befestigungseinrichtung einen am Stützfuß oder am Spriegel angeordneten Bolzen mit einem eine Abrundung oder Anfasung aufweisenden Bolzenkopf sowie mit einer als Ringnut ausgeführten Hinterschneidung und in die Hinterschneidung einschnappbare Sperrelemente aufweist, wobei die Sperrelemente einer am Spriegel oder am Stützfuß angeordneten Vorrichtung zugeordnet sind, welche eine Hülse mit einer dem Durchmesser des Bolzens angepaßten Bohrung aufweist, in die der Bolzen einschiebbar ist, daß die Hülse mehrere über ihren Umfang verteilte radiale Durchgangsöffnungen mit darin eingesetzten Kugeln als Sperrelemente aufweist, daß die Durchgangsöffnungen sich von außen nach innen soweit verjüngen, daß die Kugeln zwar in die Bohrung der Hülse hineinragen jedoch die Durchgangsöffnungen nicht passieren können, daß die Hülse von einem Hülsenkörper umgriffen ist, der einerseits eine innere Ringnut zur bereichsweisen Aufnahme der Kugeln aufweist, wenn diese durch den Bolzen bei der Steckmontage nach außen gedrängt werden und andererseits eine sich daran anschließende ringförmige Angriffsfläche aufweist, um die Kugeln nach dem Einschnappen in die Ringnut des Bolzens abzustützen und daß zum Einschnappen der Kugeln eine den Hülsenkörper in axialer Richtung und damit die Kugeln in radialer Richtung belastende Druckfeder vorgesehen ist, die einendig an einer Ringschulter der Hülse und anderendig an einer Ringschulter des Hülsenkörpers abgestützt ist. Eine solche Vorrichtung besitzt einen einfachen und kostengünstigen Aufbau, ist robust und erlaubt eine einfach und schnell zu bewerkstelligende Dachrelingmontage und ggf. auch Demontage.

Durch die erfindungsgemäßen Maßnahmen wird eine überaus schnell und einfach zu bewerkstelligende Dachrelingmontage ermöglicht, die lediglich ein Aufsetzen der Dachreling auf die Dachhaut und ein Zusammenstecken der Kupplungselemente verlangt. Die erforderliche Verriegelung erfolgt durch die in die Hinterschneidungen einschnappbaren Sperrelemente dann automatisch. Die Erfindung bietet nicht nur den Vorteil einer beträchtlichen Arbeits- und Zeiteinsparung, sondern ermöglicht auch eine von der Käuferschaft schon seit langem geforderte Montage am fertigen Fahrzeug als zuletzt zu montierendes Bauteil. Die Erfindung kann auch mit Vorteil bei der Montage von Universalbügeln nach DIN 75 302 zur formschlüssigen und rutschfesten Verbindung wie auch für am Dach eines Fahrzeugs zu befestigendes Zubehör eingesetzt werden.

Ein Ausführungsbeispiel der Erfindung wird im folgenden anhand der Zeichnungen näher erläutert, und es zeigen:
- Fig. 1: eine Dachreling mit Stützfüßen und Holmen,
- Fig. 2: einen Längsschnitt durch einen der Stützfüße mit Befestigungseinrichtung im vormontierten Zustand,
- Fig. 3: den Stützfuß nach Fig. 2 im montierten Zustand und
- Fig. 4: einen montierten Stützfuß gemäß einer abgewandelten Ausführungsform.

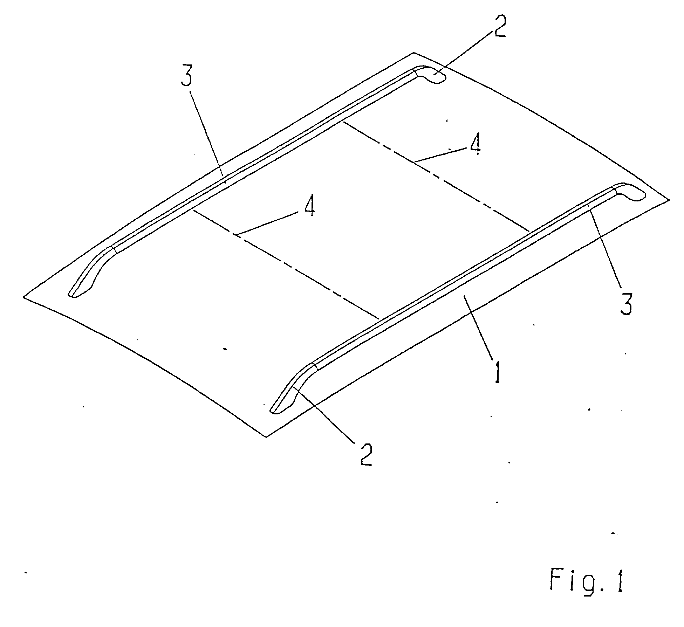

Fig. 1 läßt die Dachhaut 1 eines Fahrzeugs mit einem darauf angeordneten Dachlastenträger erkennen. Der Dachlastenträger wird aus zwei Dachrelings, bestehend aus Stützfüßen 2 und Holmen 3 sowie aus lediglich strichpunktiert angeordneten Querträgern 4, die an den Holmen befestigt sind, gebildet. Die Dachrelings erstrecken sich zumindest annähernd parallel zueinander und verlaufen in Fahrtrichtung des Fahrzeugs.

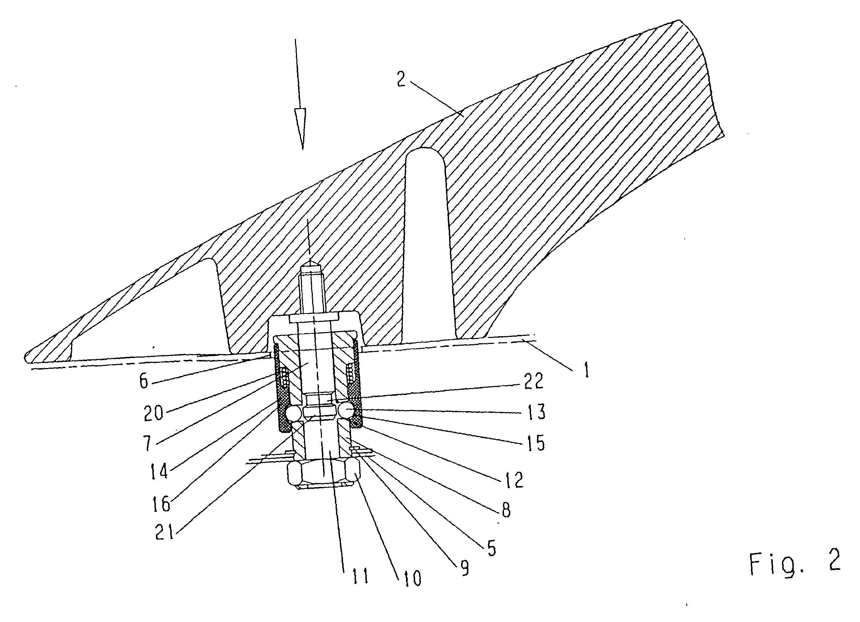

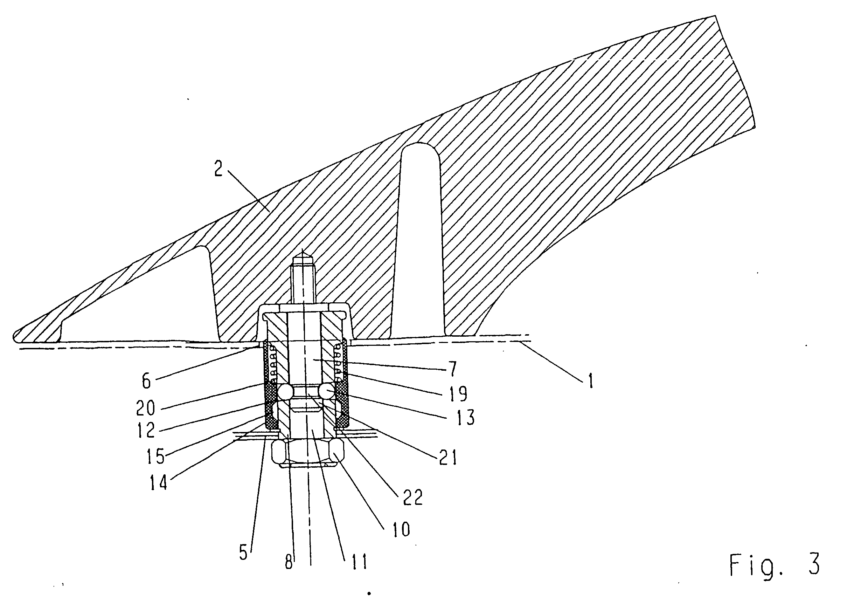

Jeder Stützfuß 2 ist mit einer aus Fig. 2 bis 4 ersichtlichen Befestigungseinrichtung zur Befestigungsanordnung an einem sich unter der Dachhaut 1 erstreckenden Spriegel 5 ausgebildet. Beim Ausführungsbeispiel nach Fig. 2 und 3 besteht die Befestigungseinrichtung aus einem am Stützfuß 2 angeordneten, eine Öffnung 6 in der Dachhaut 1 durchsetzenden Bolzen 7 und einer mit Sperrelementen ausgestatteten Hülse 8, die am Spriegel 5 festgelegt ist. Die Festlegung der Hülse 8 am Spriegel 5 erfolgt mittels eines Anschlagrings 9, der sich auf dem Spriegel 5 abstützt und mittels einer Gewindemutter 10, die auf ein freies, eine Bohrung im Spriegel 5 durchsetzendes Hülsenende aufgeschraubt ist. Die Hülse 8 weist eine dem Durchmesser des Bolzens 7 angepaßte Bohrung 11 auf, in die der Bolzen 7, wie dargestellt einschiebbar ist. Über den Umfang der Hülse 8 verteilt sind auf einer Ringzone liegend radiale Durchgangsöffnungen 12 vorgesehen, in die als Sperrelemente wirkende Kugeln 13 eingesetzt sind. Die Durchgangsöffnungen verjüngen sich von außen nach innen, so daß die Kugeln 13 zwar in die Bohrung 11 hineinragen, jedoch die Durchgangsöffnungen 12 nicht passieren können. Die Hülse 8 ist von einem Hülsenkörper 14 umgriffen, der eine innere Ringnut 15 aufweist, in die die Kugeln 13 beim Einschieben des Bolzens 7 ausweichen können. Im Anschluß an die Ringnut 15 ist eine ringförmige Angriffsfläche 16 zur Abstützung der Kugeln 13 vorgesehen, wenn sich diese in ihrer Sperrposition befinden. Durch unterschiedliche Durchmesserbereiche sowohl der Hülse 8 als auch des Hülsenkörpers 14 sind Ringschultern 17, 18 und damit ein ringförmiger Öffnungsspalt 19 zwischen der Hülse 8 und dem Hülsenkörper 14 geschaffen. In dem Öffnungsspalt 19 ist eine sich mit ihren Enden an den Ringschultern 17, 18 abstützende Druckfeder 20 angeordnet, die bestrebt ist, den Hülsenkörper 14 entlang der Hülse 8 in Richtung zum Spriegel 5 zu verschieben.

Der Bolzen 7 weist einen mit einer Abrundung oder Anfasung versehenen Bolzenkopf 21 und im Anschluß daran eine als Ringnut 22 ausgeführte Hinterschneidung zum Einschnappen der Sperrelemente auf.

Vor der Herstellung der Steckverbindung befinden sich die Kugeln 13 zufolge der auf den Hülsenkörper 14 wirkenden Kraft der Feder 20 in den Durchgangsöffnungen 12. Wird nun der Bolzen 7 in die Bohrung 11 eingeführt, so trifft der Bolzenkopf 21 auf die Kugeln 13 auf und zwingt diese unter Verschieben des Hülsenkörpers 14 gegen die Kraft der Druckfeder 20 in die im Hülsenkörper 14 ausgebildete Ringnut 15. Zur Unterstützung des Kugeleinlaufs kann zwischen dem Übergang von Ringnut 15 und Angriffsfläche 16 eine Einlaufschräge vorgesehen sein. Beim weiteren axialen Verschieben des Bolzens 7 in Pfeilrichtung passiert der Bolzenkopf 21 die Kugeln 13, die aber augenblicklich in die Ringnut 22 einschnappen sobald die radiale Abstützung durch den Bolzenkopf 21 verlorengeht. Für das Einschnappen der Kugeln sorgt die den Hülsenköper axial belastende Druckfeder 20. Sobald die Kugeln 13 in die Ringnut 15 eingeschnappt sind, ist der Montagevorgang beendet und der Stützfuß 2 zuverlässig festgelegt. Ein radiales Ausweichen der Kugeln 13 ist wegen der daran angreifenden Angriffsfläche 16 des Hülsenkörpers 14 nicht möglich.

Für eine etwaige Demontage ist lediglich die Gewindemutter 10 abzuschrauben, wonach das ganze System abgehoben werden kann.

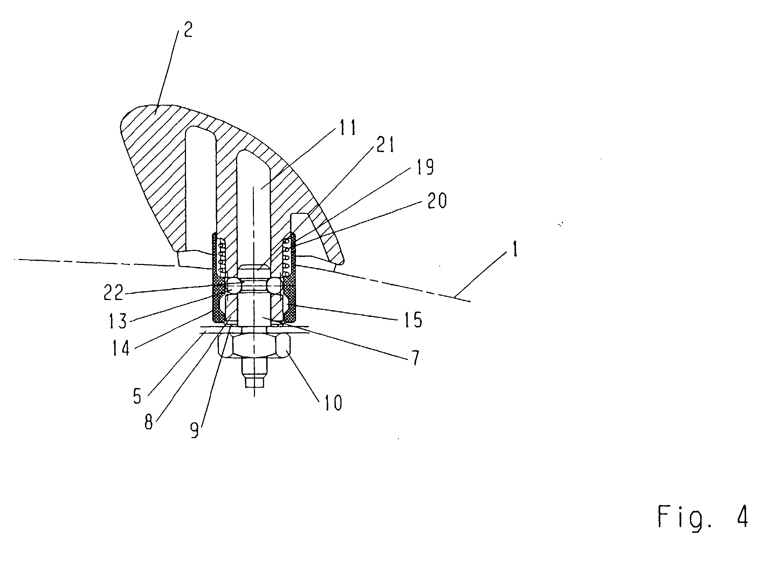

Beim Ausführungsbeispiel nach Fig. 4 ist gegenüber dem nach Fig. 2 und 3 lediglich eine Vertauschung der Steck- und Verrastungselemente vorgesehen. So ist der Bolzen 7 dem Spriegel 5 zugeordnet, während die Hülse 8, die Kugeln 13, der Hülsenkörper 14 und die Druckfeder 20 dem Stützfuß 2 zugeordnet sind. Beim Ausführungsbeispiel nach Fig. 4 bietet sich die Möglichkeit an, die Hülse 8 einstückig und materialeinheitlich mit dem Stützfuß 2 auszubilden.

## Patentansprüche

1. Dachreling für Fahrzeuge mit einem von Stützfüßen (2) getragenen Holm (3) und mit einer jedem Stützfuß (2) zugeordneten Befestigungseinrichtung zur Befestigung an einem sich unter der Dachhaut (1) des Fahrzeugs erstreckenden Spriegel (5), dadurch gekennzeichnet, daß die Befestigungsvorrichtung einen am Stützfuß (2) oder am Spriegel (5) angeordneten Bolzen (7) mit einem eine Abrundung oder Anfasung aufweisenden Bolzenkopf (21) sowie mit einer als Ringnut (22) ausgeführten Hinterschneidung und in die Hinterschneidung einschnappbare Sperrelemente aufweist, wobei die Sperrelemente einer am Spriegel (5) oder am Stützfuß (2) angeordneten Vorrichtung zugeordnet sind, welche eine Hülse (8) mit einer dem Durchmesser des Bolzens (7) angepaßten Bohrung (11) aufweist, in die der Bolzen (7) einschiebbar ist, daß die Hülse (8) mehrere über ihren Umfang verteilte radiale Durchgangsöffnungen (12) mit darin eingesetzten Kugeln (13) als Sperrelemente aufweist, daß die Durchgangsöffnungen (12) sich von außen nach innen soweit verjüngen, daß die Kugeln (13) zwar in die Bohrung (11) der Hülse (8) hineinragen jedoch die Durchgangsöffnungen (12) nicht passieren können, daß die Hülse (8) von einem Hülsenkörper (14) umgriffen ist, der einerseits eine innere Ringnut (15) zur bereichsweisen Aufnahme der Kugeln (13) aufweist, wenn diese durch den Bolzen (7) bei der Steckmontage nach außen gedrängt werden und andererseits eine sich daran anschließende ringförmige Angriffsfläche (16) aufweist, um die Kugeln (13) nach dem Einschnappen in die Ringnut (22) des Bolzens (7) abzustützen und daß zum Einschnappen der Kugeln (13) eine den Hülsenkörper (14) in axialer Richtung und damit die Kugeln in radialer Richtung belastende Druckfeder (20) vorgesehen ist, die einendig an einer Ringschulter (18) der Hülse und anderendig an einer Ringschulter (17) des Hülsenkörpers abgestützt ist.

## Claims

1. Roof rail for vehicles, having a strut (3) which is supported by supporting feet (2) and having a fastening device which is assigned to each supporting foot (2) and is intended for fastening it to a frame strut (5) extending under the roof skin (1) of the vehicle, characterized in that the fastening device has a bolt (7) which is arranged on the supporting foot (2) or on the frame strut (5) and has a bolt head (21) having a rounded or chamfered portion, and also having an undercut, which is designed as an annular groove (22), and locking elements which can be snapped into the undercut, the locking elements being assigned to a device which is arranged on the frame strut (5) or on the supporting foot (2) and which has a sleeve (8) having a hole (11) which is matched to the diameter of the bolt (7) and into which the bolt (7) can be pushed, in that the sleeve (8) has a plurality of radial through-openings (12) which are distributed over its circumference and have balls (13) inserted therein as locking elements, in that the through-openings (12) taper from the outside inwards to a sufficient extent that the balls (13) are able to protrude into the hole (11) in the sleeve (8), but are not able to pass through the through-openings (12), in that the sleeve (8) is encompassed by a sleeve body (14) which, on one side, has an inner annular groove (15) for receiving some areas of the balls (13) if the latter are forced outwards by the bolt (7) during the plug-in installation, and, on the other side, has an adjoining, annular engagement surface (16) in order to support the balls (13) after they have snapped into the annular groove (22) of the bolt (7), and in that for the snapping-in of the balls (13) a compression spring (20) is provided which stresses the sleeve body (14) in the axial direction, and therefore the balls in the radial direction, and is supported at one end on an annular shoulder (18) of the sleeve and at the other end on an annular shoulder (17) of the sleeve body.

## Revendications

1. Rail de toit pour véhicule, comprenant un longeron (3) porté par des pieds de support (2) et un dispositif de fixation associé à chaque pied de support (2) pour réaliser la fixation sur un arceau (5) s'étendant sous le panneau de toit (1) du véhicule, caractérisé en ce que le dispositif de fixation présente un boulon (7) disposé sur le pied de support (2) ou sur l'arceau (5) avec une tête de boulon (21) présentant un arrondi ou un biseautage, ainsi qu'une contre-dépouille configurée sous la forme d'une rainure annulaire (22) et des éléments de blocage encliquetables dans la contre-dépouille, les éléments de blocage étant associés à un dispositif disposé sur l'arceau (5) ou sur le pied de support (2), lequel présente une gaine (8) avec un alésage (11) adapté au diamètre du boulon (7), dans lequel le boulon (7) peut être inséré, en ce que la gaine (8) présente plusieurs ouvertures traversantes (12) radiales réparties sur son pourtour, avec des billes (13) insérées dans celles-ci en tant qu'éléments de blocage, en ce que les ouvertures traversantes (12) se rétrécissent de l'extérieur vers l'intérieur jusqu'à ce que les billes (13) pénètrent certes dans l'alésage (11) de la gaine (8), mais ne puissent pas passer par les ouvertures traversantes (12), en ce que la gaine (8) est entourée par un corps de gaine (14), qui présente d'une part une rainure annulaire intérieure (15) pour recevoir par zones les billes (13), lorsque celles-ci sont poussées par le biais du boulon (7) vers l'extérieur lors du montage par enfichage, et d'autre part une surface d'engagement annulaire (16) s'y raccordant, destinée à supporter les billes (13) après l'encliquetage dans la rainure annulaire (22) du boulon (7), et en ce que pour l'encliquetage des billes (13), il est prévu un ressort de compression (20) sollicitant le corps de gaine (14) en direction axiale et donc les billes en direction radiale, ce ressort étant supporté à une extrémité sur un épaulement annulaire (18) de la gaine et à l'autre extrémité sur un épaulement annulaire (17) du corps de gaine.
